**Europäisches Patentamt**

**European Patent Office**

**Office européen des brevets**

(19)

(11) Veröffentlichungsnummer: **0 176 674 B1**

## (12) EUROPÄISCHE PATENTSCHRIFT

(45) Veröffentlichungstag der Patentschrift: 20.02.91

(51) Int. Cl.⁵: **H04N 11/00**

(21) Anmeldenummer: 85108571.2

(22) Anmeldetag: 10.07.85

(54) **Verfahren zur Auflösungserhöhung für ein kompatibles Fernsehsystem.**

(30) Priorität: 26.09.84 DE 3435265

(43) Veröffentlichungstag der Anmeldung:
09.04.86 Patentblatt 86/15

(45) Bekanntmachung des Hinweises auf die
Patenterteilung:
20.02.91 Patentblatt 91/08

(84) Benannte Vertragsstaaten:
**BE DE FR GB IT NL**

(56) Entgegenhaltungen:
**EP-A- 0 057 826**

**RUNDFUNKTECHNISCHE MITTEILUNGEN,
Band 28, Nr. 5, September/Oktober 1984, Seiten 224-234, Norderstedt, DE; F. STOLLEN-
WERK et al.: "Fernsehsysteme mit kompatibel erhöhter Bildqualität - ein Systemvergleich"**

**NTG FACHBERICHTE, Band 74: Text und Bild-
kommunikation, September 1980, Seiten
407-416, Berlin, DE; B. WENDLAND:
"Konzepte für ein kompatibles HiFi-
Fernsehsystem"**

(73) Patentinhaber: **GRUNDIG E.M.V. Elektro-
Mechanische Versuchsanstalt Max Grundig
holländ. Stiftung & Co. KG.
Kurgartenstrasse 37
D-8510 Fürth/Bay.(DE)**

(72) Erfinder: **Güttner, Eckhard, Dipl.-Ing.
Hugo-Sickmann-Strasse 18
D-4600 Dortmund(DE)**

EP 0 176 674 B1

## Beschreibung

Die Erfindung betrifft ein Verfahren zur Auflösungserhöhung gemäß dem Oberbegriff des Patentanspruchs 1. Ein solches Verfahren ist beispielsweise bekannt aus EP-A2-057826

Der Einsatz digitaler Signalverarbeitseinrichtungen (Digitalfilter, digitale Echtzeitspeicher) bietet in Verbindung mit der Offsetübertragung die Möglichkeit, ein Fernsehbildsignal mit erheblich verbesserter Horizontalauflösung zu übertragen und ohne Kantenflackereffekte mit nun gleicher Auflösung in Richtung horizontaler und vertikaler Ortsfrequenzen wiederzugeben.

In den Veröffentlichungen "SMPTE, Winter Conference, 6-7 Februar 1981, TV Technology in the 80' s, Seiten 151-165, Scarsdale/New York", "NTZ Archiv Band 4, 1982, Nr. 10, Seiten 293-301" und NTZ Archiv, Band 4, 1982, Nr. 10, Seiten 303-312" sind Maßnahmen zur Bildabtastung In Verbindung mit geeigneter Filterung aufgezeigt, die eine verbesserte Horizontalauflösung unter weitestgehender Gewährleistung der Kompatibilität zu bestehenden Normen gewährleisten.

Aufgabe der Erfindung ist es, ein Verfahren ausgehend vom Oberbegriff des Patentanspruchs 1 anzugeben, welches eine geeignete aufwandsgünstige digitale Signalverarbeitung gestattet bei Aufrechterhaltung der Kompatibilität zu bestehenden Übertragungssystemen. Außerdem soll eine Anwendungsmöglichkeit dieses Verfahrens aufgezeigt werden. Diese Aufgabe wird bezüglich des Verfahrens durch die kennzeichnenden Merkmale des Patentanspruchs 1 gelöst und bezüglich der Anwendung durch die Merkmale des Patentanspruchs 4. Die Patentansprüche 2 und 3 geben vorteilhafte Weiterbildungen des Verfahrens nach der Erfindung an.

Die Erfindung besitzt den Vorteil, daß das Verfahren unabhängig davon, ob das optische Bild im Zeilensprungverfahren oder progressiv abgetastet wird, anwendbar ist. Somit ist das Verfahren nach der Erfindung sowohl für die standardisierte Filmabtastung als auch Fernsehbildabtastung brauchbar. Außerdem ist der digitale Verarbeitungsaufwand gering. Wie nachfolgend gezeigt wird, läßt sich die zweidimensionale Filterung in den Diagonalrichtungen bereits mit einem 625-Zeilen Signal am Filtereingang, z.B. ein Halbbild einer Hochzeilen-Zeilensprung-Kamera, durchführen, was den Verarbeitungsaufwand erheblich reduziert.

Anhand der Zeichnungen wird die Erfindung nun näher erläutert.

Es zeigen

Fig. 1 ein Blockschaltbild für die sende- und empfangsseitige digitale Signalverarbeitung,

Fig. 2 das Ortsfrequenzspektrum eines 625-zeiligen Halbbildes einer Hochzeilenkamera mit horizontaler Bandbegrenzung auf $f_c^x$

Fig. 3 das Ortsfrequenzspektrum gemäß Fig. 2 nach der Horizontalabtastung mit $f_s^x = 2f_c^x$,

Fig. 4 das Ortsfrequenzspektrum nach der senderseitigen ersten Diagonalfilterung,

Fig. 5 das Ortsfrequenzspektrum nach der senderseitigen zweiten Diagonalfilterung,

Fig. 6 das Ortsfrequenzspektrum vor der digitalen Offsetmodulation,

Fig. 7 das Ortsfrequenzspektrum nach der digitalen Offsetmodulation und horizontalen Bandbegrenzung,

Fig. 8 das Ortsfrequenzspektrum nach Nyquistfilterung und horizontaler Abtastung mit $f_s^x$,

Fig. 9 das Ortsfrequenzspektrum nach der Offsetdemodulation,

Fig. 10 die empfängerseitige planare Filterung mit Berechnung des Eingangsrasters (oberer Bereich) und des Zwischenrasters (unterer Bereich),

Fig. 11 das ortsfrequenzspektrum nach der ersten empfangsseitigen Diagonalfilterung (Sperrbereiche des Diagonalfilters schraffiert),

Fig. 12 das Ortsfrequenzspektrum am Ausgang des ersten empfangsseitigen Diagonalfilters nach erfolgter Offsetdemodulation,

Fig. 13 das Ortsfrequenzspektrum am Ausgang des empfangsseitigen zweiten Diagonalfilters,

Fig. 14 ein Blockschaltbild der senderseitigen Signalverarbeitung mit bewegungsadaptiver Auflösungssteuerung und Offsetübertragung,

Fig. 15 ein Blockschaltbild der empfangsseitigen Signalverarbeitung mit bewegungsadaptiver Auflösungssteuerung und Offsetübertragung,

Fig. 16 ein detaillierteres Blockschaltbild der empfängerseitigen Signalverarbeitung,

Fig. 17 ein Schaltbild des Vertikalfilters mit Umsteuerstufe zur empfängerseitigen bewegungsadaptiven Halbbildinterpolation,

Fig. 18 ein vereinfachtes Schaltbild des ersten Diagonalfilters zur empfängerseitigen digitalen planaren Bandbegrenzung und

Fig. 19 ein vereinfachtes Schaltbild des zweiten Diagonalfilters zur empfängerseitigen digitalen planaren Bandbegrenzung.

Für die nachfolgenden Betrachtungen wird von einem 625-Zeilen-Übertragungssystem ausge-

2

gangen und von einer Abtastung des optischen Bildes mit einer 1250 Zeilen aufweisenden Hochzeilen-Kamera. Prinzipiell sind alle nachfolgenden Ausführungen auch für andere Übertragungssysteme anwendbar, wie z.B. für das amerikanische 525-Zeilen-Übertragungssystem mit einer entsprechenden 1150-zeiligen Hochzeilen-Aufnahmekamera.

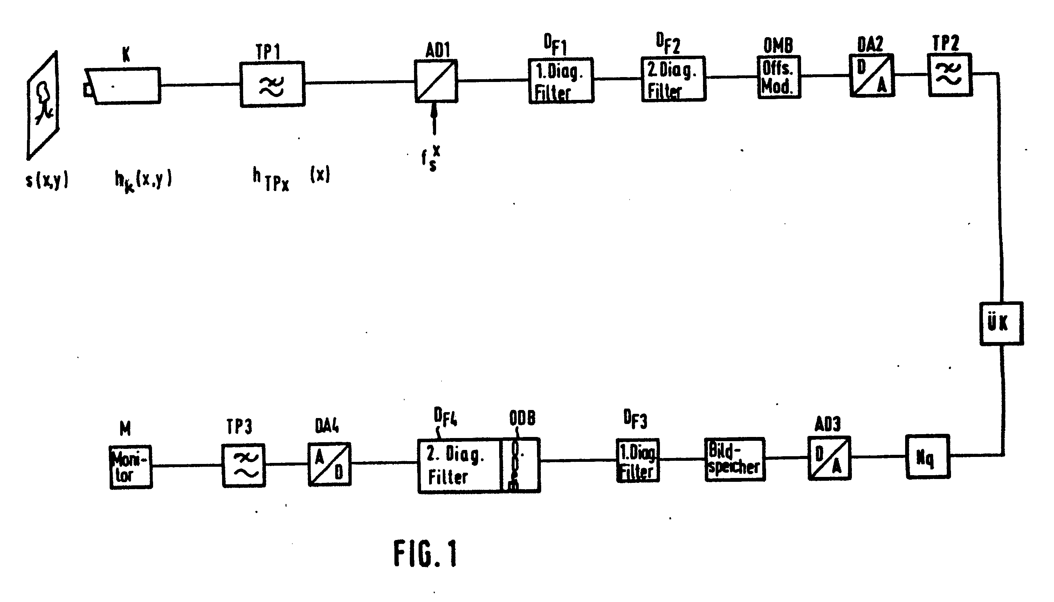

In Fig. 1 wird ein optisches Bild $s(x,y)$ mit $x$ und $y$ als Ortskoordinaten von einer Kamera K mit der zweidimensionalen Impulsantwort $h_k(x,y)$ vertikal abgetastet und durch einen Tiefpaß TP1 mit der horizontalen Impulsantwort im Ortsbereich $h_{TPx}(x)$ horizontal bandbegrenzt. Die horizontale Bandbegrenzung erfolgt bei der horizontalen Ortsfrequenz $f^x = f_c^x \approx 16$ MHz. Das 625-Zeilen-Bildsignal nach der horizontalen Bandbegrenzung kann dann im Ortsbereich wie folgt dargestellt werden:

$$b_s(x,y) = (s(x,y) ** h_k ** h_{TPx}(x) \delta(y)) \cdot {III}_{y_s}(y), \quad (1a)$$

wobei

$${III}_{y_s}(y)$$

den Dirac-Kamm für ein n-zeiliges System darstellt mit dem Zeilenabstand $y_s$. Für dieses Bildsignal gilt dann im Frequenzbereich folgende Beziehung:

$$B_{\perp s}(f^x,f^y) = (S(f^x,f^y) \cdot H_k(f^x,f^y) \cdot H_{TPx}(f^x))$$
$$** \delta(f^x) f_s^y {III}_{f_s^y}(f^y) \quad (1b)$$

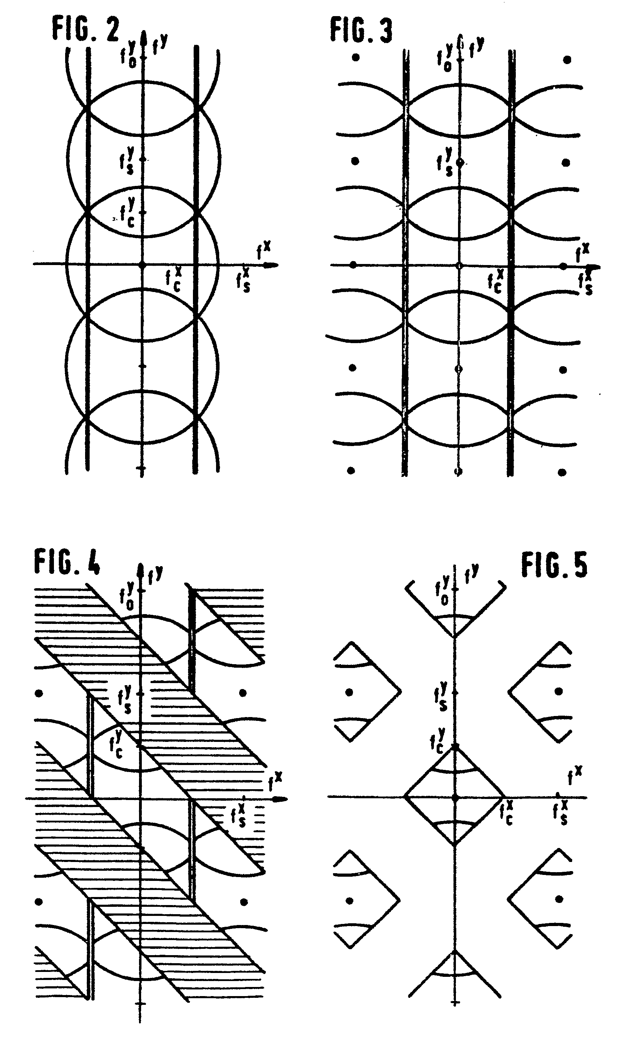

In Richtung vertikaler Ortsfrequenzen ergibt sich also eine periodische Wiederholung des durch die Kameraübertragungsfunktion $H_k(f^x,f^y)$ gefilterten, horizontal bandbegrenzten Bildsignals bei Vielfachen der vertikalen Abtastfrequenz des 625-Zeilen-Systems $f_s^y$ (Fig. 2). Der wegen der Überlappung der periodischen Spektren im Signal enthaltene Vertikalalias kann natürlich auch durch eine nachfolgende Filterung nicht mehr beseitigt werden.

An den Tiefpaß TP1 schließt sich, wie die Fig. 1 zeigt, ein Analog-Digitalwandler AD1 an, der das tiefpaßgefilterte Bildsignal $b_{\perp s}(x,y)$ für die weitere digitale Verarbeitung zusätzlich in horizontaler Richtung abtastet. Die AbtastfreQuenz $f_s^x = 2f_c^x$ des Digitalwandlers AD1 beträgt etwa 32 MHz, sodaß der horizontale Abstand $x_s$ der Abtastorte dem vertikalen Zeilenabstand $y_s$ eines 625-Zeilensignals entspricht. Der horizontalen Abtastung im Ortsbereich entspricht die nun auch in Richtung horizontaler Ortsfrequenzen periodische Wiederholung des Bildsignalspektrums (Fig. 3). Für die anschließende zweidimensionale Diagonalfilterung werden zwei hintereinandergeschaltete in orthogonalen Richtungen arbeitende, jeweils eindimensionale Filter $D_{F1}$ und $D_{F2}$ verwendet. Fig. 4 zeigt die Durchlaßbereiche nach der ersten Diagonalfilterung mittels Filter $D_{F1}$ und schraffiert die Sperrbereiche. Die Übertragungsfunktion des Diagonalfilters $D_{F1}$ ergibt sich durch die in Richtung vertikaler Ortsfrequenzen $f^y$ periodische Wiederholung des Basisstreifens $H_{TPdl}(f^x,f^y)$.

Für die Übertragungsfunktion gilt dann:

$$H_{\perp TPdl}(f^x,f^y) = H_{TPdl}(f^x,f^y) ** \delta(f^x) f_0^y {III}_{f_0^y}(f^y) \quad (2a)$$

und im Ortsbereich:

$$h_{\perp TPd1}(x,y) \quad = \quad h_{TPd1}(x,y) \cdot Ш_{y_0}(y) \qquad mit$$

$$h_{TPd1}(x,y) \quad = \quad h_{TPd}(x) \cdot \delta(x-y) \qquad\qquad (2b)$$

Die Abtastwerte $h_{TPdl}(x,y)$ liegen also auf der Diagonalen $x = y$ im Ortsbereich.

Für die Übertragungsfunktion des zweiten Diagonalfilters $D_{F2}$ ergibt sich entsprechend

$$H_{\perp TPd2}(f^x,f^y) = H_{TPd2}(f^x,f^y) ** \delta(f^x)f_0^y \, Ш_{f_0^y}(f^y) \qquad (3a)$$

$$h_{TPd2}(x,y) \quad = \quad h_{TPd2}(x,y) \cdot Ш_{y_0}(y) \qquad mit$$

$$h_{TPd2}(x,y) \quad = \quad h_{TPd}(x) \cdot \delta(x+y) \qquad\qquad (3b)$$

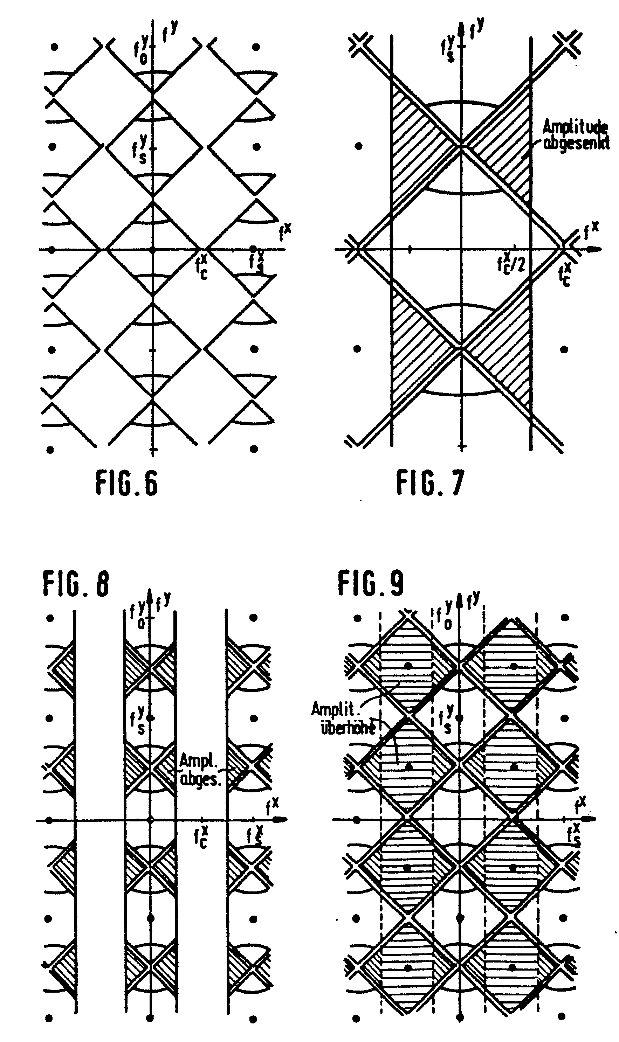

Das Signalspektrum nach dieser zweiten Filterung zeigt Fig. 5. Das wie gewünscht diagonal bandbegrenzte Basisspektrum er-scheint periodisch wiederholt, wobei die Wiederholungspunkte ein Offsetraster bilden. Das zugehörige Abtastraster im Ortsbereich ist ein hochzeiliges Offsetraster,

$$D_{\perp 0}(f^x,f^y) \quad = 2f_s^x f_s^y \cdot ( Ш_{f_0^x}(f^x) \cdot Ш_{f_0^y}(f^y) +$$

$$+ \, Ш_{f_0^x}(f^x-f_s^x) \cdot Ш_{f_0^y}(f^y-f_s^y)) \qquad (4a)$$

$$d_{\perp 0}(x,y) \quad = \quad Ш_{x_s}(x) \cdot Ш_{y_s}(y) + Ш_{x_s}(x-x_0) \cdot Ш_{y_s}(y-y_s) \qquad (4b)$$

das als Summe zweier gegeneinander versetzter 625-zeiliger Orthogonalraster dargestellt werden kann. Für die weitere Verarbeitung werden nur die Abtastwerte des ersten der beiden Raster verwendet. Das hieraus resultierende Ortsfrequenzspektrum zeigt Fig. 6. Das Basisspektrum erscheint jetzt periodisch wiederholt bei Vielfachen der horizontalen bzw. vertikalen Abtastfrequenz $f_s^x$ bzw. $f_s^y$ Es ergeben sich somit zwar dieselben Wiederholungspunkte wie für das Spektrum des Bildsignal vor der Filterung, in diagonaler Richtung sind jetzt allerdings die Teilspektren durch gleichgroße signalfreie Bereiche getrennt.

Das 625-zeilige Orthogonalraster im Ortsbereich $d_{\perp s}(x,y)$ kann als Summe von zwei gegeneinander versetzten Offsetrastern dargestellt werden.

$$d_{\perp s}(x,y) \quad = \quad Ш_{x_s}(x) \cdot Ш_{y_s}(y)$$

$$= \, Ш_{x_c}(x) \cdot Ш_{y_c}(y) + Ш_{x_c}(x-x_s) \cdot Ш_{y_c}(y-y_s)$$

$$+ \, Ш_{x_c}(x) \cdot Ш_{y_c}(y-y_s) + Ш_{x_c}(x-x_s) \cdot Ш_{y_c}(y) \qquad (5a)$$

Im Frequenzbereich ergibt sich:

4

$$D_{1s}(f^x,f^y) = f_s^x f_s^y \cdot III_{f_s^x}(f^x) \, III_{f_s^y}(f^y)$$

$$= 2f_c^x f_c^y \cdot \left( III_{f_s^x}(f^x) \, III_{f_s^y}(f^y) \right.$$

$$+ \left. III_{f_s^x}(f^x-f_c^x) \cdot III_{f_s^y}(f^y-f_c^y) \right) +$$

$$+ 2f_c^x f_c^y \cdot \left( III_{f_s^x}(f^x) \, III_{f_s^y}(f^y) \right.$$

$$- \left. III_{f_s^x}(f^x-f_c^x) \, III_{f_s^y}(f^y-f_c^y) \right) \qquad (5b)$$

Verwendet man nur die Abtastwerte des ersten der beiden Offsetraster aus Gleichung 5a, so ergibt sich ein nun dicht gefülltes Ortsfrequenzspektrum in dem die einzelnen Teilspektren überlappungsfrei aneinanderstoßen.

Die nach der horizontalen Bandbegrenzung für die Übertragung im Signal enthaltenen Spektren bei $\pm f_c^x$ können allerdings die Bildqualität für den kompatiblen Empfänger erheblich beeinträchtigen (zusätzliche Flackerstörungen, Cross-Colour). Diese beim kompatiblen Empfänger zu Störungen führenden Signalanteile werden nun dadurch reduziert, daß man ihre Spektren amplitudenmäßig mit Hilfe der Offsetmodulation unter Verwendung eines Offsetmodulationsbausteins OMB reduziert. Ein solcher Offsetmodulationsbaustein OMB ist in der DE-A1-33 44 254 beschrieben. Gleichung 5b zeigt nun die Möglichkeit, eine solche Absenkung durch unterschiedliche Gewichtung der Offsetraster nach Gleichung 5a zu erreichen. Die nach der DE-A1-33 44 254 erforderliche Absenkung auf 1/3 der Amplitude des Basissignals ergibt sich z.B. bei Gewichtung der Abtastwerte des ersten Rasters mit 2/3 und der des zweiten Rasters mit 1/3. Die Teilspektren bei $f^x = 0$ haben dieselbe Amplitude wie bei der alleinigen Verwendung des ersten Rasters aus Gleichung 5a, die Amplitude der Teilspektren bei $\pm f_c^x$ beträgt aber nur 2/3 - 1/3 = 1/3.

Das Ortsfrequenzspektrum nach dieser digitalen Offsetmodulation und nach horizontaler Bandbegrenzung auf die Bandbreite des Übertragungskanals ist in Fig. 7 dargestellt, wobei die Anteile der in der Amplitude reduzierten Teilspektren schraffiert sind. Die Übertragung dieses Vollbildes erfolgt im synthetischen Zeilensprung in zwei aufeinanderfolgenden Halbbildern des 625-Zeilensprungsystems. Da das Bildsignal am Ausgang des Offsetmodulationsbausteins 0MB digital vorliegt und der angenommene Übertragungskanal ein Analogkanal des 625-Zeilen Standard-Fernsehsystems ist, muß nach der Offsetmodulation eine D/A-Wandlung mittels D/A-Wandler DA2 vorgenommen werden. An diesen D/A-Wandler DA2 schließt sich ein Tiefpaßfilter TP$_2$ an, das das offsetmodulierte und nun in analoger Form vorliegende Bildsignal auf die Bandbreite des Ubertragungskanals ÜK, z.B. 5,5 MHz, begrenzt. Im Empfänger wird das ankommende Signal mit Hilfe eines Nyquistfilters Nq mit $f^x$ 6dB $= f_c^x /2$ bandbegrenzt. Damit ist das fehlerfreie Aneinandersetzen der Teilspektren bei der Demodulation des Offsetsignals möglich. Die für eine digitale Verarbeitung dieses Signals erforderliche Abtastung erfolgt mittels A/D-Wandler AD3 wie beim Sender in einem Orthogonalraster, wobei der Abstand der Abtastorte in horizontaler Richtung $x_s$ ebenfalls dem Abstand $y_s$ der Zeilen des 625-Zeilen-Systems entspricht. Mit Hilfe eines Bildspeichers Bsp werden jeweils zwei aufeinander folgende Halbbilder zu einem Vollbild zusammengefaßt. Das Spektrum dieses Vollbildsignals zeigt Fig. 8. Der horizontal durch das Nyquistfilter Nq im Eingang bandbegrenzte Basisstreifen erscheint periodisch wiederholt bei Vielfachen der horizontalen Abtastfrequenz $f_s^x$. Die Offsetdemodulation erfolgt nun wie die Offsetmodulation auf der Senderseite durch entsprechende Gewichtung der Offsetteilraster, in die das orthogonale Abtastraster entsprechend den Gleichungen 5a und 5b zerlegt werden kann. Mit Gewichtungsfaktoren von 2 für das erste und -1 für das zweite der beiden Offsetraster ergibt sich das in Fig. 9 dargestellte Ortsfrequenzspektrum. Die Amplitude der Signalspektren bei Vielfachen von $f_s^x$ bleibt unverändert (2 + (-1) = 1) während bei $f_c^x \pm n.f_s^x$ das Eingangssignalspektrum vertikal um $f_c^y$ versetzt mit dem Faktor 2 - (-1) = 3 bewertet wird. Offsetzusatzspektrum und Baisbandsignal sind nun mit gleicher Amplitude 1 wieder zusammengefügt worden.

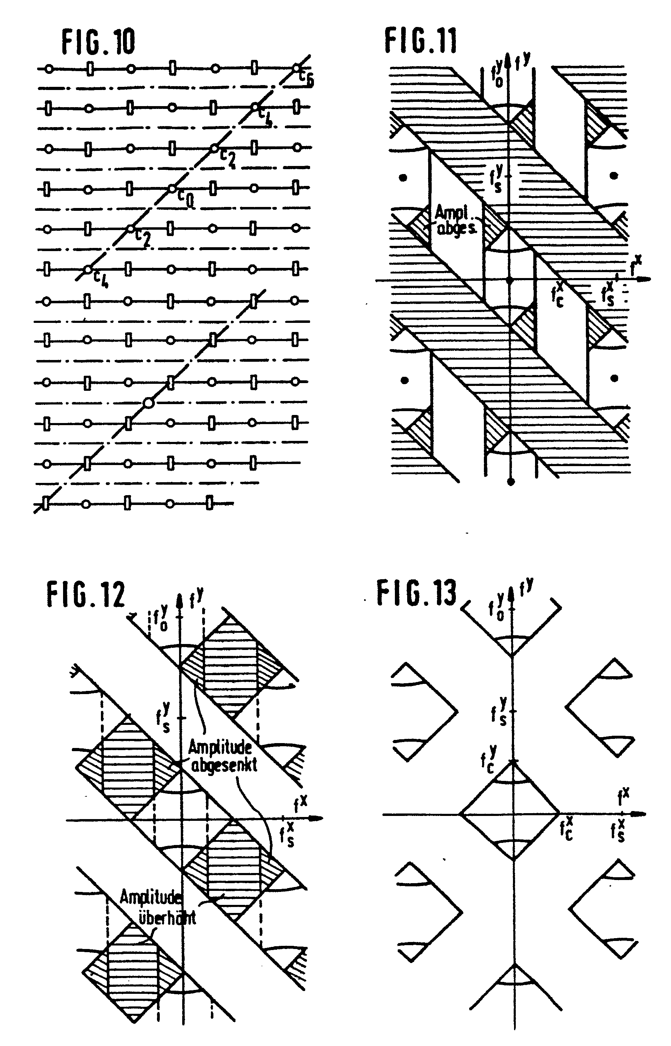

Die planare Rekonstruktionsfilterung erfolgt wie die Bandbegrenzung auf der Senderseite durch zwei hintereinandergeschaltete eindimensionale Diagonalfilter D$_{F3}$ und D$_{F4}$. Wegen der durch die Offsetdemodulation überhöhten Amplitude der zu unterdrückenden Signalspektren werden allerdings erhöhte Anforderungen an die Sperrdämpfung der Filter gestellt. Die Abtastwerte der Impulsantworten der beiden Diagonalfilter D$_{F3}$ und D$_{F4}$ liegen im Ortsbereich auf den Diagonalen x = y bzw. x = -y. Somit werden bei der ersten Diagonalfilterung für die Berechnung eines Bildpunktes nur Abtastwerte aus einem der beiden Offsetraster von Gleichung 5a herangezogen (Fig. 10). Dies bietet die Möglichkeit, die Offsetdemodulation, wie Fig. 1 zeigt, erst nach dieser ersten Filterung durchzuführen. Bei der Berechnung der Ausgangsdaten des zweiten Diagonalfilter $D_{F4}$ werden jetzt allerdings Bilddaten aus beiden Rastern verwendet. Summiert man jedoch die mit den geraden Filterkoeffizienten $c_0$, $c_{\pm2}$, ... des zweiten Diagonalfilter $D_{F4}$ und die mit den ungeraden Koeffizienten $C_{\pm1}$, $c_{\pm3}$, ... gewichteten Bildpunktdaten getrennt, so kann die Offsetdemodulation sogar bis zur letzten Addition im zweiten Filter hinausgeschoben werden. Wie Fig. 1 zeigt, ist der Offsetdemodulationsbaustein ODB Bestandteil des Digonalfilters $D_{F4}$.

Fig. 11 zeigt die Ortsfrequenzspektren nach der ersten Diagonalfilterung, Fig. 12 nach der anschließenden Offsetdemodulation und Fig. 13 nach der zweiten Diagonalfilterung. Das Ausgangssignal des zweiten Filters $D_{F4}$ ist ein hochzeiliges Offsetsignal, dessen Basisspektrum gleiche Auflösung in Richtung horizontaler und vertikaler Ortsfrequenzen zeigt. Nach einer D/A-Wandlung mittels Digital-Analogwandler DA4, nach horizontaler Bandbegrenzung mittels Tiefpaß TP3 und schließlich auch vertikaler Filterung durch die Übertragungsfunktion des wiedergebenden Monitors M sind die periodischen Spektren so stark reduziert, daß der Betrachter den Eindruck einer zeilenfreien Wiedergabe mit gegenüber dem herkömmlichen Übertragungsverfahren deutlich verbesserter Horizontalauflösung hat.

Für die bisherigen Ausführungen wurde davon ausgegangen, daß die sendeseitige Abtastung des optischen Bildes mit der Hochzeilenkamera progressiv erfolgt, also ohne Zeilensprung, mit 625-Zeilen 1:1. Innerhalb von 40 msec wird dann ein Bild ohne Zeilenversatz zweimal abgetastet. Von diesen beiden gleichen Bildern wird nur das erste weiterverarbeitet. Erfolgt die Abtastung des optischen Bildes mit der Hochzeilen-Kamera jedoch im Zeilensprungverfahren mit zwei zeilenversetzten Halbbildern pro 40 msec, so ist eine zusätzliche Normkonvertierung nötig, die im Ausführungsbeispiel nach Fig. 1 hinter den A/D-Wandler AD1 einzufügen ist. Aus dem 1249-zeiligen Signal der Hochzeilenkamera wird ein aus zwei Halbbildern bestehendes 1250 Zellen 2:1 Signal erzeugt mit genau gleich langen Halbbildern.

Im folgenden wird eine vorteilhafte Anwendungsmöglichkeit des Verfahrens nach der Erfindung aufgezeigt und zwar für ein Fernsehübertragungssystem mit bewegungsadaptiver Bildsteuerung.

Der Vorteil der Vollbildübertragung, die Verbesserung der Wiedergabe hoher vertikaler Ortsfrequenzen und in Verbindung mit der Offsetübertragung die Erweiterung des übertragbaren Bereiches horizontaler Ortsfrequenzen, beschränkt allerdings die Bewegungsauflösung auf die Übertragung von 25 Bewegungsphasen/Sekunde. Schnellere Bewegungen, insbesondere kontrastreicher Bildbereiche erscheinen ruckhaft. In der Veröffentlichung "High Quality Television by Signal Processing, 2nd International Conference on New Systems and Services in Telecommunication, Liège, November 1983"` ist ein Fernsehübertragungssystem beschrieben, bei welchem diese Störung durch Umsteuerung auf eine Ubertragung von 50 BewegungsPhasen/Sekunde in Bildbereichen mit starker Bewegung vermieden wird. Bei diesem Übertragungsmode können nun allerdings aufeinanderfolgende Halbbilder nicht mehr zu einem Vollbild zusammengefaßt werden, sodaß die übertragbare Auflösung für vertikale Ortsfrequenzen auf die halbe Zeilenzahl eines Halbbildes und die übertragbare Horizontalauflösung wegen des Wegfalls der Offsetübertragung auf die Bandbreite des Übertragungskanals beschränkt wird. Ähnliches gilt für das in der DE-A1-32 33 882 beschriebene System mit bewegungsadaptiver Bildsteuerung.

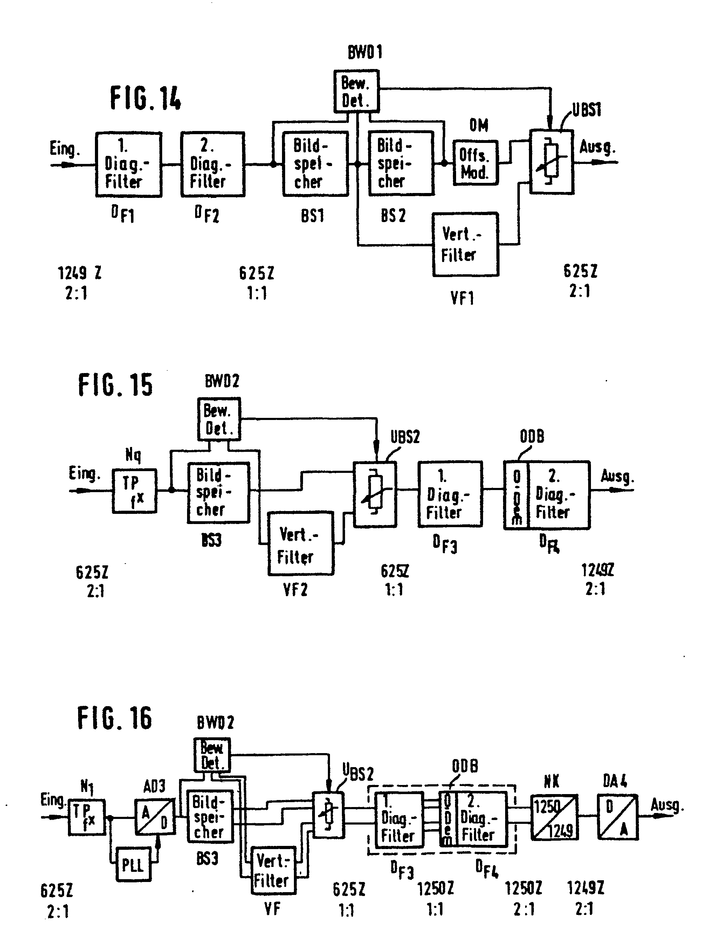

Zur Vermeidung von Halbbildaliasfehlern, deren Störwirkung durch die höhere Vertikalauflösung der aufnehmenden Hochzeilenkamera noch verstärkt wird, ist senderseitig für diesen Übertragungsmode eine zusätzliche vertikale Bandbegrenzung unerläßlich. Das Blockschaltbild der senderseitigen Verarbeitung mit bewegungsadaptiver Auflösungssteuerung ist in Fig. 14 wiedergegeben.

Das von der Hochzeilenkamera aufgenommene Bildsignal, 1249Z,2:1, wird zunächst wie beschrieben halbbildweise diagonal bandbegrenzt. Das Ausgangssignal des digitalen Planarfilters - Diagonalfilter $D_{F1}$ und $D_{F2}$ - 625Z,1:1, wird in 2 Vollbildspeichern BS1 und BS2 verzögert, über die auch die Bewegungsdetektion mittels Bewegungsdetektor BWD1 durchgeführt wird. Signalanteile außerhalb des maximal übertragbaren Ortsfrequenzbereiches können somit die Bewegungsdetektion nicht beeinträchtigen. Mit Hilfe des zweiten Vollbildspeichers BS2 wird das synthetische Zeilensprungsignal für die Vollbildübertragung erzeugt und anschließend offsetmoduliert mittels Offsetmodulator OM. Das Vertikalfilter VF1 übernimmt die zusätzliche vertikale Bandbegrenzung des bereits diagonal vorgefilterten Bildsignals auf die halbe Abtastfrequenz eines Halbbildes des 625-Zeilen-Systems, wobei nur das jeweils zu übertragende Halbbildraster berechnet wird. Gesteuert vom Bewegungsdetektor BWD1 wird zwischen dem offsetmodulierten Vollbildsignal mit synthetischem Zeilensprung und dem vertikal bandbegrenzten Zeilensprungsignal umgeblendet. Dazu ist eine Umblendschaltung UBS1 vorgesehen. Die Bildabtastung des Signals in Fig. 14 und die digitale Aufbereitung wird entsprechend dem Ausführungsbeispiel gemäß Fig. 1 realisiert.

Das Prinzipschaltbild des verbesserten Empfängers zeigt Fig. 15. Das empfangene, mittels des Nyquistfilters Nq horizontal bandbegrenzte Bildsigal wird zunächst in einem Bildspeicher BS3 verzögert.

Über diesen Bildspeicher erfolgt einerseits die Bewegungserkennung, andererseits ermöglicht er den gleichzeitigen Zugriff auf zwei aufeinanderfolgende Halbbilder. Gesteuert vom Bewegungsdetektor BWD2 wird im Empfänger zwischen dem Ausgangs-Vollbildsignal des Bildspeichers BS3 und dem durch das Vertikalfilter VF2 aus dem jeweils aktuellen Halbbild durch Tiefpaßfilterung errechneten Vollbild mittels der Umblendeinrichtung UBS2 umgeblendet. Das Vollbildsignal am Ausgang des Vertikalfilters VF2 ist auf $|f^Y| \leqslant f_c^X$ bandbegrenzt. Eine nachfolgende Offsetdemodulation in Verbindung mit der planaren diagonalen Bandbegrenzung mittels der Diagonalfilter $D_{F3}$ und $D_{F4}$ mit Offsetdemodulationsbaustein ODB bleibt auf dieses Signal ohne Einfluß. Damit ist eine zusätzliche bewegungsadaptive-Steuerung der empfängerseitigen Diagonalfilter bzw. der Offsetdemodulation nicht erforderlich. Die Digitalabtastung des analog übertragenen Bildsignals mit Vor- und Nachfilterung wird im Zusammenhang mit Fig. 16 besprochen.

Im folgenden wird nun die schaltungstechnische` Realisierung des Fernsehsystems mit bewegungsadaptiver Auflösungsteuerung beschrieben. Da die Funktionsblöcke von Sender und Empfänger für das beschriebene Fernsehsystem gleich aufgebaut sind, wird nur auf die schaltungstechnische Realisierung des Empfängers eingegangen.

Das Blockschaltbild der Empfängerschaltung ist in Fig. 16 dargestellt. Nach analoger Nyquistfilterung mit $f^X$ 6dB $f_c^X$ /2 $\stackrel{\wedge}{=}$ 4 MHz mittels Nyquistfilter Nq wird das ankommende Bildsignal im AD-Wandler AD3 analog-digital gewandelt. Die Abtastfrequenz beträgt 16 MHz $\stackrel{\wedge}{=}$ $f_s^X$ . Die Phase dieses 16 MHz-Abtasttaktes wird während der Übertragung der Referenzzeile mittels einer PLL-Schaltung so geregelt, daß Sender- und Empfänger-Abtastraster übereinstimmen. Zu dieser Synchronisation kann eine aus der DE P 34 14 271 bekannte Schaltung verwendet werden. Das digitalisierte Bildsignal wird anschließend in den Bildspeicher BS3 eingelesen, an dessen Ausgang auf jeweils zwei aufeinanderfolgende Halbbilder gleichzeitig zugegriffen werden kann. Die Bewegungsdetektion mittels Bewegungsdetektor BWD2 erfolgt wie beispielsweise in NTZ Archiv, Band 4 (1982), Heft 10, Seiten 313 bis 321, beschrieben, über diesen Bildspeicher durch die Auswertung der Differenz aufeinanderfolgender Vollbilder.

Das am Ausgang des Bildspeichers BS3 folgende Vertikalfilter VF ist als Transversalfilter aufgebaut. Im halbbildweisen Wechsel errechnet dieses Filter ein Vollbild aus den Zeilen des ersten bzw. zweiten Halbbildrasters an seinem Eingang. Durch den Abgriff des unverarbeiteten Signals an der Zeilenlaufzeitkette des Vertikalfilters bleibt der Aufwand für den Laufzeitausgleich zwischen vertikal gefiltertem und unverarbeitetem Signal gering. In Abhängigkeit vom Steuersignal des Bewegungsdetektors BWD2 wird zwischen diesen beiden Signalen umgeblendet.

Die Offsetdemodulation erfolgt, wie bereits erwähnt, erst inneralb des zweiten Diagonalfilters $DF_4$. Die Demodulation erfolgt dabei durch unterschiedliche Gewichtung der Abtastwerte der beiden Offsetraster aus Gleichung 5a. Die Gewichtung der Teilraster kann den zu verarbeitenden Signalwertebereich drastisch erweitern, wie das angegebene Beispiel für eine Anhebung des Zusatzspektrums um den Faktor 3 zeigt. Eine Offsetdemodulation am Eingang des ersten Diagonalfilters $D_{F3}$ erzwingt die Erweiterung der Datenwortbreite von 8 auf 10 bit. Der Mehraufwand für die folgenden Diagonalfilter wäre beträchtlich. Durch die Verschiebung der Offsetdemodulation bis zur letzten Summation im zweiten Diagonalfilter bleibt die erforderliche Erweiterung der Wortbreite praktisch ohne Auswirkungen. Hinter dem Ausgang des zweiten Diagonalfilters $D_{F4}$ erfolgt eine Normkonversion von 1250 Zeilen 2:1 auf 1249 Zeilen 2:1 in einem Normkonverter NK und eine Digital-Analogwandlung mittels DA-Wandler DA4. Die analog zu Fig. 1 notwendige Filterung und die Wiedergabe durch den Monitor ist in Fig. 16 nicht dargestellt.

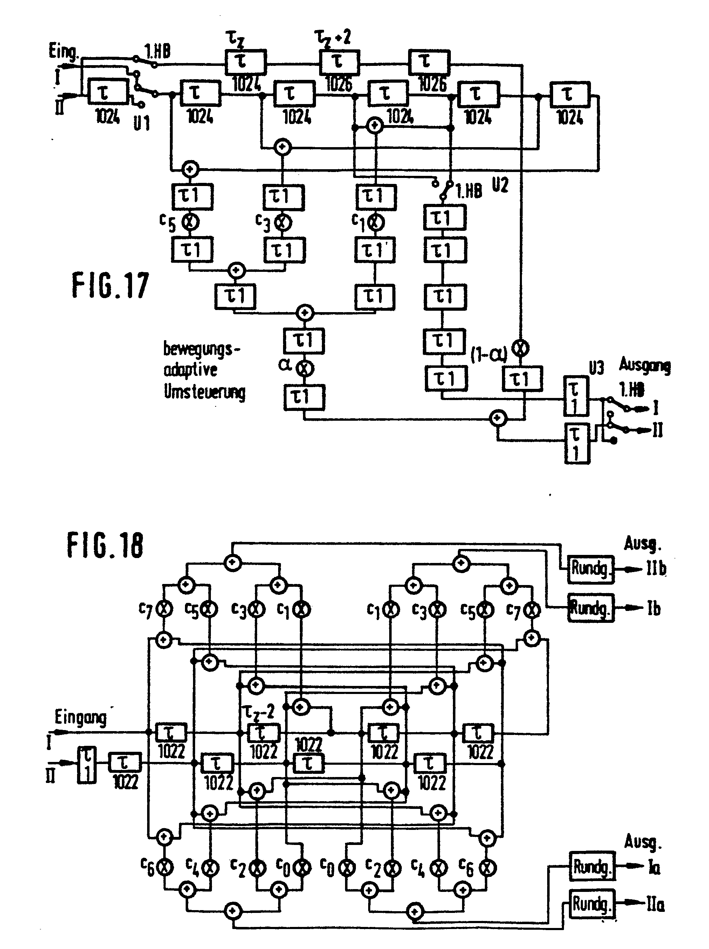

Der prinzipielle Aufbau des Vertikalfilters VF mit der bewegungsdetektorgesteuerten Umblendschaltung ist in Fig. 17 dargestellt. Darin bedeuten $\tau_1$ ` Elementarverzögerungsglieder, d.h. Verzögerung um einen Bildpunkt, $\tau$ 1024 Verzögerungsglieder mit einer Verzögerung um 1024 Bildpunkte, d.h. 1 Zeile, und $\tau_{1026}$ Verzögerungsglieder mit einer Verzögerung von 1026 Bildpunkten, d.h. 1 Zeile + 2 Bildpunkte.

An den Eingang des Vertikalfilters VF werden vom Bildspeicher BS3 gleichzeitig eine Zeile des ersten Halbbildes I und die örtlich darunterliegende Zeile des zugehörigen zweiten Halbbildes II des ankommenden Bildsignals ausgegeben. In der gezeichneten Stellung der Umschalter U1, U2 und U3 wird das am Eingang I liegende Signal in der Laufzeitkette des Filters verzögert, gelangt aber sonst unverändert an den Ausgang I. Mit Hilfe der Multiplizierer kann nun umgeblendet werden zwischen der Ausgabe von aus den Zeilen des ersten Halbbildes vertikal erfilterten Zeilen ($\alpha$ = 1) und den Originalzeilen des zweiten Halbbildes ($\alpha$ = 0) am Ausgang II des Vertikalfilters.

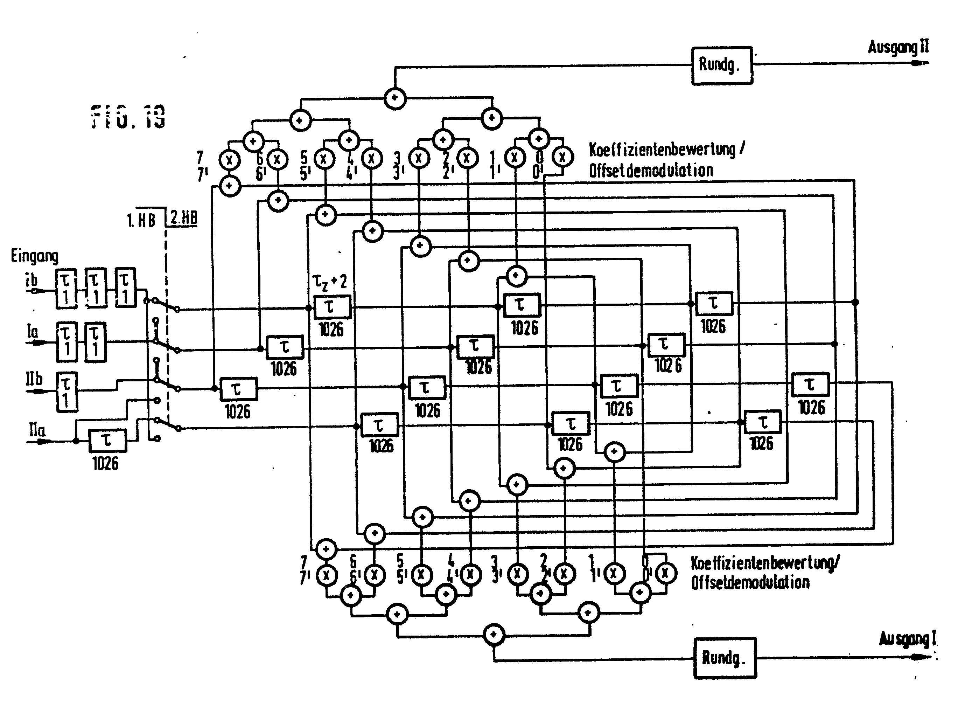

Der Aufbau der beiden Diagonalfilter mit jeweils 15 Koeffizienten zeigen Fig. 18 und Fig. 19. Durch die Elementarverzögerung $_1$ um einen Bildpunkt am Eingang II liegen jetzt nicht die Daten zweier vertikal benachbarter Bildpunkte, sondern die von zwei diagonal benachbarten gleichzeitig am Filtereingang. Die Verzögerung der Laufzeitglieder $\tau_{1022}$ dieses ersten Diagonalfilters beträgt 1 Zeile - 2 Bildpunkte, sodaß an den Anzapfungen der Laufzeitkette die in Richtung der ansteigenden Diagonalen benachbarten Bildpunktdaten gleichzeitig zur Verfügung stehen. Da das erste Diagonalfilter parallel die Bilddaten von zwei Zeilen eines 625-zeiligen Vollbildes erhält, ist die gleichzeitige Berechnung von vier örtlich benachbarten Zeilen des Hochzeilenbildes am Filterausgang erforderlich. Für die Berechnung eines Bildpunktes werden allerdings nur entweder die geraden Koeffizienten $c_0$, $c_{\pm 2}$, ... , der errechnete Bildpunkt liegt im Eingangsabtastraster, oder die ungeraden Koeffizienten $c_{\pm 1}$, $c_{\pm 3}$, ... für das Zwischenraster benötigt. Die Abtastorte der vom ersten Filter gleichzeitig ausgegebenen vier Bildpunktdaten des hochzeiligen Zwischenbildes liegen im Ortsbereich in Richtung der ansteigenden Diagonalen.

Die Bildpunktverzögerungen $\tau_1$ bzw. Zeilenverzögerungen $\tau_{1026}$ vor dem 2. Diagonalfilter sorgen dafür, daß die Abtastorte der Bildpunkte am Eingang dieses Filters in Richtung der fallenden Diagonalen liegen. Die Elementarverzögerungen der vier Laufzeitketten des 2. Filters betragen 1 Zeile + 2 Bildpunkte. Das Bildsignal am Filterausgang ist ein 625-ZeilenSignal, wobei für die hochzeilige Zeilensprungwiedergabe durch die halbbildweise Umschaltung der Signale am Eingang des 2. Filters abwechselnd ein 1. Halbbild im eingangsseitigen 625-Zeilen-Abtastraster und ein 2. Halbbild im horizontal und vertikal versetzten Zwischenraster errechnet wird. Verbleiben die Umschalter U für beide Halbbilder in der gezeichneten Stellung, so berechnet das zweite Diagonalfilter nur jeweils die Bilddaten im Originalraster des 625-ZeilenEingangssignals für eine Vollbildwiedergabe 625 Z, 1:1, 20 ms.

Nach zeilenweiser Parallel-Serien-Wandlung, die Taktfrequenz verdoppelt sich hierdurch auf 32 MHz, und anschließender Scan-Konversion (Normwandlung) mittels der Einrichtung NK von 1250 auf 1249 Zeilen 2:1 liegt am Ausgang des Digital-Analog-Wandlers DA4 ein normgerechtes hochzeiliges Zeilensprungsignal.

Für die beschriebenen Transversalfilter werden identische, mit Schreib-Lese-Speichern aufgebaute, Verzögerungseinheiten eingesetzt, die bei der Taktfrequenz von 16 MHz bis zu 1024 Bildpunkte speichern können. Die für die verschiedenen Filterrichtungen jeweils erforderliche Elementarverzögerung wird durch eine je nach Filterrichtung von Zeile zu Zeile verschobene Adressierung der Speicher erreicht.

Die Bewertung der Bildpunktdaten an den Abgriffen der Laufzeitketten erfolgt durch Abrufen der Multiplikationsergebnisse aus in programmierbaren Festwertspeichern abgelegten Ergebnistabellen. Um für die Offsetdemodulation innerhalb des zweiten Diagonalfilters auch von ganzen Zahlen abweichende Gewichtungsfaktoren ohne zusätzlichen Hardwareaufwand realisieren zu können, wird die Gewichtung gleichzeitig mit der Koeffizientenbewertung durchgeführt. Die filterinterne Verarbeitungswortlänge von 16 bit bietet genügend Reserve, sodaß eine darüber hinausgehende Erweiterung der Wortbreite nicht erforderlich ist.

Die Erfindung wurde zum einfacheren Verständnis ohne Berücksichtigung der Farbfernsehübertragung beschrieben. Selbstverständlich kann die Erfindung auch bei Farbfernsehsystemen angewandt werden, wobei das aufbereitete Luminanzsignal mit den getrennt verarbeiteten Farbanteilen zu einem kompatiblen FBAS-Signal zusammengesetzt wird.

## Ansprüche

1. Verfahren zur Auflösungserhöhung für ein kompatibles Fernsehsystem, wobei eine Vertikalabtastung des optischen Bildes mit einer Hochzeilenkamera erfolgt und eine horizontale Frequenz-Bandbegrenzung dieses vertikal abgetasteten Bildsignals vorgenommen wird, gekennzeichnet durch folgende Verfahrensschritte:
   - das horizontal frequenzbandbegrenzte Bildsignal wird zusätzlich in Richtung horizontaler Ortsfrequenzen abgetastet (AD1) wobei der horizontale Abstand ($x_s$) der Abtastorte dem vertikalen Zeilenabstand ($y_s$) des zu übertragenden Bildsignals entspricht,
   - das zusätzlich horizontal abgetastete Bildsignal wird zweidimensional in den Diagonalrichtungen gefiltert($D_{F1}$, $D_{F2}$),
   - die in den Diagonalrichtungen gefilterten Bildsignale werden offsetmoduliert (OMB) und auf die Kanalbreite des Übertragungskanals bandbegrenzt, wobei jene Signalanteile, die beim kompatiblen Empfänger zu Störungen führen würden, in der Amplitude abgesenkt bzw. weniger stark gewichtet werden.

2. Verfahren nach Anspruch 1, dadurch gekennzeichnet, daß die über den Übertragungskanal übertragenen Bildsignale in Richtung horizontaler Ortsfrequenzen mittels eines Nyquistfilters bandbegrenzt werden und anschließend in einem Orthogonalraster abgetastet werden, wobei der Abstand der Abtastorte in horizontaler Richtung ($x_s$) ebenfalls dem Abstand ($y_s$) der übertragenen Zeilen entspricht, daß die jeweils zwei aufeinanderfolgend übertragenen Halbbilder zu einem Vollbild zusammengefaßt werden, daß die zu einem Vollbild zusammengefaßten Bildsignale offsetdemoduliert werden, wobei die sendeseitig in der Amplitude abgesenkten, bzw. weniger stark gewichteten Signalanteile, entsprechend

EP 0 176 674 B1

wiederangehoben werden, daß die offsetdemodulierten Bildsignale zweidimensional in den Diagonalrichtungen gefiltert werden und vor der Wiedergabe durch einen Monitor bandbegrenzt werden.

3. Verfahren nach Anspruch 1 oder 2, dadurch gekennzeichnet, daß die sendeseitige und empfangsseitige zweidimensionale Filterung in den Diagonalrichtungen mittels zweier hintereinandergeschalteter eindimensionaler Filter ($D_{F1}$,$D_{F2}$) vorgenommen wird.

4. Verfahren nach Anspruch 2 und 3, dadurch gekennzeichnet, daß die empfangsseitige Offsetdemodulation (ODB) innerhalb des zweiten ($D_{F4}$) der hintereinandergeschalteten eindimensionalen Filter ($D_{F3}$,$D_{F4}$) erfolgt.

5. Anwendung des Verfahrens nach einem der Ansprüche 1 bis 4 für ein Fernsehübertragungssystem mit bewegungsadaptiver Bildsteuerung, wobei die Offsetmodulation nur für solche Bildbereiche angewendet wird, die stationär oder nur schwach bewegt sind, und für stärker bewegte Bildbereiche eine Bildübertragung mit reduzierter Auflösung in Richtung vertikaler und horizontaler Ortsfrequenzen jedoch erhöhter zeitlicher Auflösung erfolgt.

## Claims

1. Method for increasing the resolution for a compatible television system, in which a vertical scanning of the optical image is carried out with a highdefinition camera and a horizontal frequency band limitation of this vertically scanned picture signal is executed, characterized by the following method steps:
   - the horizontally frequency-band-limited picture signal is additionally scanned (ADI) in the direction of horizontal location frequencies, the horizontal spacing ($x_8$) of the scanning locations corresponding to the vertical line spacing ($y_s$) of the picture signal to be transmitted,
   - the additionally horizontally scanned picture signal is filtered ($D_{F1,}$, $D_{F2}$) two-dimensionally in the diagonal directions,
   - the picture signals filtered in the diagonal directions are offset-modulated (OMB) and are bandlimited to the channel width of the transmission channel, those signal components which would lead to interference in compatible receivers having their amplitude decreased or being weighted less highly.

2. Method according to Claim 1, characterized in that the picture signals transmitted over the transmission channel are band-limited in the direction of horizontal location frequencies by means of a Nyquist filter and are subsequently scanned in an orthogonal raster, the spacing of the scanning locations in the horizontal direction ($x_s$) likewise corresponding to the spacing ($y_8$) of the transmitted lines, in that the respective two successively transmitted fields are combined to form a frame, in that the picture signals combined to form a frame are offset-demodulated, the signal components which had their amplitude decreased or were less highly weighted at the transmitting end being raised again correspondingly, and in that the offset-demodulated picture signals are filtered two-dimensionally in the diagonal directions and are band-limited by a monitor before reproduction.

3. Method according to Claim 1 or 2, characterized in that the two-dimensional filtering in the diagonal directions at the transmitting end and receiving end is executed by means of two series-connected one-dimensional filters ($D_{F1}$, $D_{F2}$).

4. Method according to Claims 2 and 3, characterized in that the offset demodulation (ODB) at the receiving end is not carried out until the second ($D_{F4}$) of the series-connected one-dimensional filters ($D_{F3}$, $D_{F4}$).

5. Application of the method according to one of Claims 1 to 4 for a television transmission system with motion-adaptive picture control, in which the offset modulation is only used for such picture areas which are stationary or exhibit only little motion, and a picture transmission with reduced resolution in the direction of vertical and horizontal location frequencies, but with increased time resolution, is carried out for picture areas exhibiting more motion.

9

## Revendications

1. Procédé pour augmenter la définition d'un système de télévision compatible, et selon lequel on réalise une exploration verticale de l'image optique avec une caméra à haute définition et on applique une limitation horizontale à la bande des fréquences de ce signal d'image exploré verticalement, caractérisé par les étapes opératoires suivantes :
   - le signal d'image, dont la bande des fréquences est limitée horizontalement, est en outre exploré (ADI) dans la direction de fréquences horizontales de lieux, la distance horizontale $(x_s)$ des points d'exploration, correspondant a la distance verticale $(y_s)$ entre les lignes du signal d'image devant être transmis,
   - le signal d'image, qui est en supplément exploré horizontalement, est filtré $(D_{F1}, D_{F2})$ d'une manière bidimensionnelle dans les directions diagonales,
   - les signaux d'image, filtrés dans les directions diagonales, sont soumis à une modulation par décalage (OMB) et leur bande est limitée à la largeur du canal de transmission, auquel cas toute composante de signal, qui conduirait à des perturbations dans le récepteur compatible, est réduite, en ce qui concerne son amplitude, ou est moins fortement pondérée.

2. Procédé selon la revendication 1, caractérisé en ce que la bande des signaux d'image transmis par l'intermédiaire du canal de transmission est limitée dans la direction des fréquences horizontales de lieux, au moyen d'un filtre de Nyquist, puis ses signaux sont explorés selon une trame orthogonale, la distance des lieux d'exploration dans la direction horizontale $(x_s)$ correspondant également à la distance $(y_s)$ entre les lignes transmises, que les deux trames respectives, transmises successivement, sont réunies pour former une image complète, qu'on soumet les signaux d'image rassemblés pour former une image complète à une démodulation par décalage, auquel cas les composantes de signaux, dont l'amplitude est réduite côté émission ou qui sont moins fortement pondérées, sont à nouveau amplifiées, que les signaux d'image ayant subi la démodulation par décalage sont filtrés d'une manière bidimensionnelle dans les directions diagonales et que la bande de ces signaux est limitée avant leur reproduction par un moniteur.

3. Procédé suivant la revendication 1 ou 2, caractérisé par le fait que le filtrage bidimensionnel, réalisé côté émission et côté réception, dans les directions diagonales est exécuté au moyen de deux filtres unidimensionnels $D_{F1}, D_{F2})$ branchés en série.

4. Procédé selon les revendications 2 et 3, caractérisé en ce que la démodulation par décalage (ODB), réalisée côté réception, n'est exécutée que dans le second $(D_{F4})$ des filtres unidimensionnels $(D_{F3}, D_{F4})$ branchés en série.

5. Application du procédé selon l'une des revendications 1 à 4, pour un système de transmission de télévision à commande adaptative de l'image en fonction du déplacement, et pour laquelle on utilise la démodulation par décalage uniquement pour des zones de l'image, qui sont fixes ou se déplacent seulement faiblement, et on réalise une transmission de l'image avec une définition réduite dans la direction de fréquences verticales et horizontales de lieux, mais avec une définition temporelle accrue, pour des parties de l'image qui ont des déplacements plus amples.

FIG. 1

EP 0 176 674 B1

FIG. 2

FIG. 3

FIG. 4

FIG. 5

FIG.6

FIG.7

FIG.8

FIG.9

13

FIG.10

FIG.11

FIG.12

FIG.13

EP 0 176 674 B1

# FIG.14

**BWD1**

Eing. → [1. Diag.-Filter] $D_{F1}$ → [2. Diag.-Filter] $D_{F2}$ → [Bild-spei-cher] BS1 → [Bild-spei-cher] BS2 → [Bew. Det.] → [Offs. Mod.] OM → [UBS1] → Ausg.

[Vert.-Filter] VF1

1249 Z 2:1    625Z 1:1    625Z 2:1

# FIG.15

**BWD2**

Eing. → [TP fx] Nq → [Bild-spei-cher] BS3 → [Bew. Det.] → [UBS2] → [1. Diag.-Filter] $D_{F3}$ → [Odem / 2. Diag.-Filter] ODB $D_{F4}$ → Ausg.

[Vert.-Filter] VF2

625Z 2:1    625Z 1:1    1249Z 2:1

# FIG.16

**BWD2**

Eing. → [TP fx] N1 → [A/D] AD3 → [Bild-spei-cher] BS3 → [Bew. Det.] → [UBS2] → [1. Diag.-Filter] $D_{F3}$ → [Odem] ODB → [2. Diag.-Filter] $D_{F4}$ → [1250/1249] NK → [D/A] DA4 → Ausg.

[PLL]    [Vert.-Filter] VF

625Z 2:1    625Z 1:1    1250Z 1:1    1250Z 2:1    1249Z 2:1

15

FIG.17

bewegungsadaptive
Umsteuerung

FIG.18

FIG. 13

Ausgang II
Ausgang I

Rundg.
Rundg.

Koeffizientenbewertung / Offsetdemodulation
Koeffizientenbewertung / Offseldemodulation

Eingang
Ib
Ia
IIb
IIa

1.HB  2.HB

1026